# EUROPÄISCHE PATENTSCHRIFT

(11) **EP 3 332 102 B1**
(45) Veröffentlichungstag und Bekanntmachung des Hinweises auf die Patenterteilung: **11.09.2019**
(21) Anmeldenummer: 16741650.2
(22) Anmeldetag: 25.07.2016
(51) Int. Cl.: F01L 1/344, F02F 7/00, F01L 1/02

(54) **VERBRENNUNGSMOTOR UND VERFAHREN ZUR MONTAGE EINES VERBRENNUNGSMOTORS**
INTERNAL COMBUSTION ENGINE AND ASSEMBLY METHOD OF SUCH AN ENGINE
MOTEUR À COMBUSTION INTERNE ET METHODE DE MONTAGE D'UN TEL MOTEUR

(30) Priorität: 03.08.2015 DE 102015214725
(43) Veröffentlichungstag der Anmeldung: 13.06.2018
(73) Patentinhaber: Volkswagen Aktiengesellschaft, 38440 Wolfsburg (DE)
(72) Erfinder: HERRMANN, Julian, 38518 Gifhorn (DE); KUPHAL, Andre, 38100 Braunschweig (DE)
(86) Internationale Anmeldenummer: PCT/EP2016/067692
(87) Internationale Veröffentlichungsnummer: WO 2017/021193

(56) Entgegenhaltungen:
- EP-A2- 2 816 203
- DE-A1-102009 025 603
- DE-A1-102013 223 112

## Beschreibung

Die Erfindung betrifft einen Verbrennungsmotor und ein Verfahren zur Montage eines solchen Verbrennungsmotors.

Der Ventiltrieb für einen (Hubkolben-)Verbrennungsmotor umfasst jeweils mindestens ein, regelmäßig zwei Einlass- und Auslassventile für jeden Brennraum des Verbrennungsmotors. Diese Einlass- und Auslassventile werden über Nockenwellen gesteuert, wobei bei Brennkraftmaschinen mit mehr als zwei Ventilen pro Zylinder regelmäßig zwei Nockenwellen zum Einsatz kommen.

Es ist bekannt, zur Verbesserung des Betriebsverhaltens einer Brennkraftmaschine die Ventilsteuerzeiten der Einlass- und/oder Auslassventile dadurch zu verändern, dass die Phasenwinkel der diese steuernden Nockenwellen verstellt werden. Hierzu wird die jeweilige Nockenwelle mittels eines Phasenstellers gegenüber einem Antriebsrad, über das diese rotierend angetrieben wird, um einen definierten Winkel, den Phasenwinkel, verdreht, wodurch die Ventilsteuerzeiten der damit angesteuerten Ventile in Richtung "früh" oder "spät" verstellt werden können.

Aus der DE 10 2013 223 112 A1 ist ein Verbrennungsmotor mit einer Nockenwelle bekannt, deren Phasenwinkel gegenüber der die Nockenwelle über einen Riemen antreibenden Kurbelwelle mittels eines Phasenstellers veränderbar ist. Der Phasensteller umfasst einen mit der Nockenwelle verbundenen Flügelrotor sowie ein das Riemenrad der Nockenwelle ausbildendes Gehäuse. Zwischen dem Flügelrotor und dem Gehäuse des Phasenstellers sind mehrere Druckkammern ausgebildet, die, gesteuert durch ein Phasenstellerventil, bedarfsweise mit Öl befüllt werden können, um den Flügelrotor (und damit die Nockenwelle) relativ zu dem Gehäuse (und damit der Kurbelwelle) mit dem Ziel der Veränderung der Ventilsteuerzeiten zu verdrehen. Das Phasenstellerventil ist zentral innerhalb des Flügelrotors angeordnet und umfasst einen axial bezüglich der Rotationsachse des Phasenstellers beziehungsweise der Nockenwelle verschiebbaren Ventilkörper, der in Abhängigkeit von seiner jeweiligen Stellung Zu- und Abströmkanäle der Druckkammern freigibt beziehungsweise verschließt. Ein Verschieben des Ventilkörpers wird mittels eines elektromechanischen Aktuators bewirkt, der außenseitig mit einer Abdeckung des Zylinderkopfs des Verbrennungsmotors verschraubt ist, wobei sich ein Hauptteil des Aktuators einschließlich eines Betätigungsstifts, der mit einem Ende den Ventilkörper kontaktiert, durch eine Durchgangsöffnung der Abdeckung erstreckt. Ein rohrförmiger Abschnitt des Hauptteils erstreckt sich in längsaxialer Richtung über einen Endabschnitt eines rohrförmigen Abschnitts des Gehäuses des Phasenstellers, wodurch diese einen teilweise mit dem zur Betätigung des Phasenstellers genutzten Öl gefüllten Innenraum begrenzen. Zur Abdichtung dieses Innenraums gegenüber der Umgebung ist zwischen den beiden rohrförmigen Abschnitten ein Radialwellendichtring angeordnet.

Ein Nachteil, der sich aus der Ausgestaltung des aus der DE 10 2013 223 112 A1 bekannten Verbrennungsmotors ergibt, liegt darin, dass bei einem Abnehmen der Abdeckung des Zylinderkopfs, beispielsweise im Rahmen einer Wartung des Riementriebs, der Aktuator mit abgenommen werden muss, wodurch der zwischen dem Aktuator und dem Gehäuse des Phasenstellers ausgebildete Innenraum freigelegt wird. Da dieser zumindest teilweise mit dem zur Betätigung des Phasenstellers vorgesehenen Öl gefüllt ist, ist dies mit einem erheblichen Aufwand verbunden. Hinzu kommt, dass für ein Wiederaufsetzen der Abdeckung und damit des Aktuators ein erheblicher Aufwand betrieben werden muss, um wieder eine ausreichend exakte koaxiale Ausrichtung des Aktuators relativ zu dem Phasensteller zu erreichen. Diese ist für eine gute Dichtungswirkung des Radialwellendichtrings erforderlich.

Dazu vergleichbare Verbrennungsmotoren in mehreren Ausführungsformen sind zudem in der WO 2015/000476 A1 beschrieben. Der jeweilige Aktuator kann dabei außenseitig an einem Riemenkasten oder einem Zylinderkopfgehäuse des Verbrennungsmotors befestigt sein und sich teilweise durch eine Durchgangsöffnung in dem Riemenkasten oder dem Zylinderkopfgehäuse erstrecken. Bei einer anderen in der WO 2015/000476 A1 beschriebenen Ausführungsform ist vorgesehen, das Dichtelement nicht zwischen dem Gehäuse des Phasenstellers und dem Aktuator sondern zwischen dem Gehäuse des Phasenstellers und einem Abschnitt des Riemenkastens oder des Zylinderkopfgehäuses anzuordnen.

Ausgehend von diesem Stand der Technik lag der Erfindung die Aufgabe zugrunde, einen gattungsgemäßen Verbrennungsmotor anzugeben, der eine einfache Wartung des für den Antrieb der Nockenwelle(n) vorgesehenen Getriebes, das insbesondere in Form eines Riementriebs ausgebildet sein kann, ermöglicht. Insbesondere sollte eine Ausgestaltung eines gattungsgemäßen Verbrennungsmotors angegeben werden, durch die eine gute Zugänglichkeit des mittels einer Abdeckung abgedeckten Getriebes im Rahmen einer Wartung ermöglicht wird, ohne dass dafür der Aktuator für den Phasensteller demontiert werden müsste.

Diese Aufgabe wird mittels eines Verbrennungsmotors gemäß dem Patentanspruch 1 gelöst. Ein Verfahren zur Montage einer konkreten Ausgestaltung eines solchen Verbrennungsmotors ist Gegenstand des Patentanspruchs 10. Vorteilhafte Ausgestaltungen des erfindungsgemäßen Verbrennungsmotors sind Gegenstände der weiteren Patentansprüche und ergeben sich aus der nachfolgenden Beschreibung der Erfindung.

Ein Verbrennungsmotor mit einem Motorgehäuse, einem Ventiltrieb, der eine Nockenwelle, einen mit der Nockenwelle wirkverbundenen Phasensteller und einen Aktuator zur Betätigung des Phasenstellers umfasst, wobei (zumindest) der Phasensteller und der Aktuator einen Innenraum begrenzen, und mit einer den Phasensteller umgebenden Abdeckung, ist zum einen durch einen von der Abdeckung umgebenen Aktuatorhalter zur Befestigung des Aktuators an dem Motorgehäuse gekennzeichnet. Weiterhin ist vorgesehen, dass der (zumindest) von dem Phasensteller und dem Aktuator (und gegebenenfalls auch von dem Aktuatorhalter) begrenzte Innenraum mittels eines zwischen dem Phasensteller und dem Aktuatorhalter angeordneten Dichtelements gegen einen Flüssigkeitsaustritt abgedichtet ist.

Erfindungsgemäß ist demnach vorgesehen, dass, anders als in dem beschriebenen Stand der Technik vorgesehen, die Funktion der Halterung des Aktuators einerseits und der Abdeckung des Phasenstellers und gegebenenfalls des gesamten oder eines Teils des die Nockenwelle antreibenden Getriebes andererseits nicht mittels eines einzigen beziehungsweise integralen Bauteils zu realisieren, sondern für beide Funktionen separate Bauteile zu verwenden. Dadurch können Vorteile realisiert werden. Insbesondere wird dadurch ermöglicht, die Abdeckung zu Wartungszwecken abzunehmen, ohne dass dafür auch der Aktuator abgenommen werden muss. Ein weiterer Vorteil der erfindungsgemäßen Ausgestaltung eines Verbrennungsmotors liegt darin, dass die Abdeckung, da diese keine Haltefunktion für den Aktuator erfüllen muss, vergleichsweise einfach, insbesondere strukturell relativ wenig belastbar, ausgebildet werden kann. Dies kann insbesondere auch ermöglichen, die Abdeckung kostengünstig aus Kunststoff auszubilden. Insgesamt können dadurch auch Gewichtsvorteile im Vergleich zu einer strukturell stärker belastbaren, gegebenenfalls aus einem Metall ausgebildeten Abdeckung, die, wie es aus dem Stand der Technik bekannt ist, die Haltefunktion für den Aktuator erfüllt, realisiert werden.

Das Motorgehäuse kann insbesondere ein Zylinder(kurbel)gehäuse und/oder ein Zylinderkopfgehäuse des Verbrennungsmotors umfassen.

Bei der Nockenwelle kann es sich um eine Einlassnockenwelle, die ausschließlich zur Betätigung von Einlassventilen vorgesehen ist, um eine Auslassnockenwelle, die ausschließlich zur Betätigung von Auslassventilen vorgesehen ist, oder um eine so genannte gemischte Nockenwelle, die für eine Betätigung von sowohl Einlass- als auch Auslassventilen vorgesehen ist, handeln.

Der Phasensteller kann einfach oder doppelt wirkend ausgebildet sein. Ein doppelt wirkender Phasensteller kann beispielsweise mit einer sogenannten Welle-in-Welle-Nockenwelle zusammenwirken, bei der eine äußere Nockenwelle eine innere Nockenwelle aufnimmt, wobei diese unterschiedlichen Gaswechselventile betätigen und wobei die Nocken der inneren Nockenwelle sich durch Durchgangsöffnungen in der äußeren Nockenwelle erstrecken, um die entsprechenden Gaswechselventile kontaktieren zu können. Eine solche Welle-in-Welle-Nockenwelle eignet sich insbesondere zur Nutzung als gemischte Nockenwelle.

Die zumindest den Phasensteller und den Aktuatorhalter (jeweils vollständig oder zumindest teilweise) umgebende Abdeckung kann vorzugsweise lösbar mit dem Motorgehäuse verbunden sein. Alternativ kann die Abdeckung auch (vorzugsweise) lösbar mit mindestens einer anderen Komponente des Verbrennungsmotors und/oder einer den Verbrennungsmotor umfassenden Brennkraftmaschine und/oder eines den Verbrennungsmotor integrierenden Kraftfahrzeugs, insbesondere radbasierten Kraftfahrzeug (vorzugsweise Pkw oder Lkw), verbunden sein.

Bei dem Dichtelement kann es sich vorzugsweise um einen Radialwellendichtring handeln, da durch diesen auf relativ kostengünstige Weise eine gute Abdichtung eines zwischen einem statischen Bauteil, hier dem Aktuatorhalter, und einem bewegten Bauteil, hier dem Phasensteller, ausgebildeten Spalts realisiert werden kann. Dabei kann die dichtende Lauffläche des Radialwellendichtrings entweder den Phasensteller oder den Aktuatorhalter kontaktieren. Alternative Ausgestaltungen des Dichtelements können ebenfalls zum Einsatz kommen. Insbesondere kann auch eine Ausgestaltung des Dichtelements als Axialwellendichtring vorgesehen sein.

Das Dichtelement kann auch in den Phasensteller und/oder den Aktuatorhalter integriert sein. Beispielsweise kann ein Aktuatorhalter (ggf. aus Kunststoff) mit angespritztem Dichtelement vorgesehen sein.

Eine Abdichtung des zumindest von dem Phasensteller und dem Aktuator begrenzten Innenraums kann insbesondere sinnvoll oder notwendig sein, weil dieser einen Abschnitt eines hydraulischen Versorgungspfads für den Phasensteller darstellen kann und dieser somit zumindest teilweise mit einer Flüssigkeit, beispielsweise einem Öl, gefüllt sein kann.

Als "Aktuator" wird erfindungsgemäß eine (insbesondere von einer Steuerungsvorrichtung) ansteuerbare Betätigungsvorrichtung verstanden, die ein Betätigungselement umfasst, das infolge der Ansteuerung bewegt wird, wobei diese Bewegung des Betätigungselements zu einer Verstellung des Phasenstellers führt. Der Aktuator kann beispielsweise elektromechanisch, insbesondere elektromagnetisch ausgebildet sein, so dass die Bewegung des Betätigungselements insbesondere auf einer in Abhängigkeit von der Ansteuerung erfolgten Erzeugung eines Magnetfelds beruhen kann. Der Aktuator kann jedoch beispielsweise auch hydraulisch oder pneumatisch betätigbar sein.

In einer bevorzugten Ausgestaltung des erfindungsgemäßen Verbrennungsmotors kann vorgesehen sein, dass die Abdeckung eine Durchgangsöffnung aufweist, durch die sich der Aktuator (vollständig oder zumindest teilweise) und/oder der Aktuatorhalter (teilweise) erstreckt. Dabei kann vorzugsweise vorgesehen sein, dass ein zwischen der Abdeckung und dem Aktuator und/oder dem Aktuatorhalter ausgebildeter Spalt zumindest dadurch abgedichtet ist, dass diese Elemente in einem Überlappungsbereich einander (möglichst vollflächig) kontaktieren. Gegebenenfalls kann auch vorgesehen sein, in diesen Überlappungsbereich ein Dichtelement, beispielsweise einen O-Ring, zu integrieren, sofern besondere Anforderungen an die schützende Funktion der Abdeckung gestellt werden. Die Durchgangsöffnung in der Abdeckung kann insbesondere ermöglichen, ein oder mehrere Anschlussstücke, wie beispielsweise Steckverbinder, aus dem von der Abdeckung umgebenen Raum herauszuführen, wodurch ein einfaches Anschließen des Aktuators an eine die Energie für dessen Betätigung bereitstellende, beispielsweise elektrische, pneumatische oder hydraulische Energiequelle und/oder an eine für die Ansteuerung des Aktuators genutzte Steuerungsvorrichtung ermöglicht wird.

Bei einer solchen Ausgestaltung eines erfindungsgemäßen Verbrennungsmotors kann dann weiterhin vorgesehen sein, dass die Durchgangsöffnung derart dimensioniert ist, dass die Abdeckung ohne Demontage des Aktuators und/oder des Aktuatorhalters demontierbar ist, so dass eine Demontage der Abdeckung auch ohne Demontage des Aktuators möglich ist.

Ein weiterer relevanter Vorteil, der sich aus der erfindungsgemäßen Ausgestaltung eines Verbrennungsmotors ergeben kann, liegt darin, dass mittels eines separaten Aktuatorhalters auf relativ einfache Weise eine gute Ausrichtung des Aktuators relativ zu dem Phasensteller realisiert werden kann. Dies ergibt sich aus der vorzugsweise vorgesehenen ausschließlichen Funktion des Aktuatorhalters zur Befestigung des Aktuators an dem Motorgehäuse, die ermöglicht, diesen relativ klein und als statisch vorteilhaftes Tragegestell auszubilden. Im Gegensatz dazu muss bei der aus dem Stand der Technik bekannten Nutzung der Abdeckung auch als Träger für den Aktuator eine steife Dimensionierung für die relativ große und insbesondere auch großflächige Abdeckung vorgesehen werden, um dauerhaft eine ausreichend exakte Positionierung des Aktuators relativ zu dem Phasensteller zu gewährleisten.

Eine dauerhaft möglichst exakte Ausrichtung des Aktuatorhalters zu dem Phasensteller kann insbesondere für eine ausreichende Dichtwirkung des zwischen diesen Komponenten angeordneten Dichtelements relevant sein. Dies gilt insbesondere, weil der Phasensteller eine im Betrieb des Verbrennungsmotors funktional bewegte Komponente darstellt, während der Aktuatorhalter funktional nicht bewegt wird.

Eine dauerhaft möglichst exakte Ausrichtung des Aktuatorhalters zu dem Phasensteller kann zudem dann besonders relevant sein, wenn, wie vorzugsweise vorgesehen, der Verbrennungsmotor ein zentral in den Phasensteller integriertes Phasenstellerventil aufweist. Ein solches Phasenstellerventil kann einen koaxial oder parallel zu einer Rotationsachse der Nockenwelle verschiebbaren Ventilkörper umfassen. Dieser Ventilkörper kann dabei weiterhin bevorzugt mittels eines koaxial oder parallel zu einer Rotationsachse der Nockenwelle verschiebbaren Betätigungselements des Aktuators betätigt werden. Da der Ventilkörper des Phasenstellerventils im Betrieb des Verbrennungsmotors rotierend angetrieben sein kann, während das Betätigungselement des Aktuators gleichzeitig keine entsprechende Rotationsbewegung ausführt, kann durch eine möglichst exakte Ausrichtung des Aktuatorhalters und damit des Aktuators zu dem Phasensteller ein hinsichtlich des Verschleißes vorteilhafter Kontakt zwischen dem Ventilkörper und dem Betätigungselement realisiert werden.

In einer weiterhin bevorzugten Ausgestaltung des erfindungsgemäßen Verbrennungsmotors kann vorgesehen sein, dass der Phasensteller und/oder der Aktuatorhalter (jeweils) eine um die Rotationsachse der Nockenwelle umlaufende Passungsfläche aufweist/aufweisen. Diese kann/können vorteilhaft für eine initiale Ausrichtung des Aktuatorhalters und damit des Aktuators relativ zu dem Phasensteller genutzt werden.

Dazu kann bei einem erfindungsgemäßen Verfahren zur Montage eines solchen Verbrennungsmotors vorgesehen sein, dass der Aktuatorhalter mit seiner Passungsfläche auf eine erste umlaufende Gegenpassungsfläche eines Montagewerkzeugs aufgesteckt und anschließend das den Aktuatorhalter tragende Montagewerkzeug mit einer zweiten umlaufenden Gegenpassungsfläche auf die Passungsfläche des Phasenstellers aufgesteckt wird. Ein weiterer Vorteil des durch die erfindungsgemäße Ausgestaltung eines Verbrennungsmotors ermöglichte relativ kleine Ausgestaltung des Aktuatorhalters ergibt sich dann daraus, dass eine unvorteilhafte Handhabung einer relativ großen, gegebenenfalls nicht besonders steifen und gegebenenfalls an vielen Befestigungspunkten zu befestigenden Abdeckung, die zudem einen Aktuator integriert, der relativ exakt zu dem Phasensteller ausgerichtet werden muss, nicht erforderlich ist.

Eine vorteilhafte Ausrichtung des Aktuatorhalters relativ zu dem Phasensteller kann vorzugsweise dadurch erreicht werden, dass Befestigungsmittel zur Befestigung des Aktuatorhalters an einem Befestigungsabschnitt des Motorgehäuses vorgesehen sind, die eine befestigte Positionierung des Aktuatorhalters relativ zu dem Befestigungsabschnitt des Motorgehäuses innerhalb eines definierten Toleranzausgleichsbereichs bezüglich der Ausrichtung radial zu einer Rotationachse der Nockenwelle ermöglichen.

Diese Befestigungsmittel können in konstruktiv einfacher Weise dadurch ausgebildet sein, dass eine oder mehrere Durchgangsöffnungen in dem Aktuatorhalter und eine oder mehrere sich durch die Durchgangsöffnungen des Aktuatorhalters und in Aufnahmeöffnungen des Motorgehäuses erstreckende Befestigungselemente vorgesehen sind, wobei die Durchgangsöffnungen des Aktuatorhalters und/oder die Aufnahmeöffnungen bezüglich der sich durch diese erstreckenden Abschnitte der Befestigungselemente jeweils ein Übermaß aufweisen. Besonders bevorzugt können die Befestigungselemente als Schrauben ausgebildet sein, die in Innengewinde der Aufnahmeöffnungen des Motorgehäuses eingreifen. Ein Übermaß der Durchgangsöffnungen des Aktuatorhalter im Vergleich zu den Außendurchmessern der (Gewinde-)Bolzen der Schrauben kann in Grenzen eine Verschiebung in den radialen Richtungen bezüglich der Rotationsachse der Nockenwelle zum Zwecke einer möglichst exakten Ausrichtung des Aktuatorhalters relativ zu dem Phasensteller ermöglichen, bis die Schrauben so fest angezogen worden sind, dass eine befestigte Positionierung des Aktuatorhalters durch eine klemmende Fixierung zwischen dem Motorgehäuse und den Schraubenköpfen realisiert ist.

Die erfindungsgemäße Ausgestaltung eines Verbrennungsmotors weist insbesondere dann Vorteile auf, wenn diese einen trocken laufenden Riementrieb zur Übertragung von Antriebsleistung zwischen einem Riemenrad einer Kurbelwelle des Verbrennungsmotors und einem Riemenrad der Nockenwelle aufweist, wobei das Riemenrad der Nockenwelle insbesondere den Phasensteller integrieren kann. Dies gilt, weil insbesondere bei einem solchen trocken laufenden Riementrieb, für den folglich keine Schmierung mit einem zu diesem Zweck zugeführten Schmiermittel vorgesehen ist, eine Abdichtung des gegebenenfalls mit einer Flüssigkeit und insbesondere Öl gefüllten, von dem Phasensteller und dem Aktuator begrenzten Innenraums relevant ist.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:

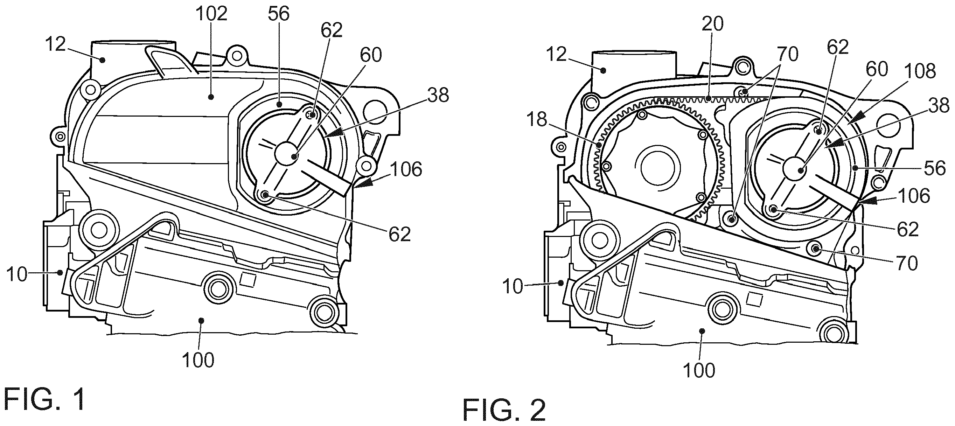

- Fig. 1:: einen Teil eines erfindungsgemäßen Verbrennungsmotors in einer Ansicht von vorne;
- Fig. 2:: den Verbrennungsmotor gemäß der Fig. 1 mit abgenommener Abdeckung für den Nockenwellenantrieb;
- Fig. 3:: einen Längsschnitt durch einen Abschnitt des Verbrennungsmotors gemäß der Fig. 2;
- Fig. 4:: die Abdeckung für den Nockenwellenantrieb in einer perspektivischen Ansicht;
- Fig. 5:: den Aktuatorhalter des Verbrennungsmotors mit Radialwellendichtring in einer ersten perspektivischen Ansicht;
- Fig. 6:: den Aktuatorhalter gemäß der Fig. 5 jedoch ohne Radialwellendichtring in einer zweiten perspektivischen Ansicht;
- Fig. 7:: den Aktuator des Verbrennungsmotors in einer perspektivischen Ansicht;
- Fig. 8:: einen ersten Schritt bei der Montage des Aktuatorhalters;
- Fig. 9:: einen zweiten Schritt bei der Montage des Aktuatorhalters;
- Fig. 10:: einen dritten Schritt bei der Montage des Aktuatorhalters; und
- Fig. 11:: den Phasensteller, den Aktuatorhalter und das zur Montage des Aktuatorhalters verwendete Werkzeug.

Der in den Zeichnungen dargestellte Verbrennungsmotor ist in bekannter Weise als Hubkolbenmotor ausgebildet. Demnach weist dieser ein Motorgehäuse auf, das ein Zylindergehäuse 10 sowie ein mit dem Zylindergehäuse 10 verbundenes Zylinderkopfgehäuse 12 umfasst. Innerhalb des Zylindergehäuses 10 sind ein oder mehrere Zylinder (nicht sichtbar) ausbildet, in denen jeweils ein Kolben (nicht dargestellt) beweglich geführt ist. Die Zylinderwände begrenzen gemeinsam mit den Oberseiten der Kolben und von dem Zylinderkopfgehäuse ausgebildeten Brennraumdächern Brennräume, in denen in bekannter Weise zeitlich versetzt ein Kraftstoff-Frischgas-Gemisch verbrannt wird. Die durch die Verbrennungen in den Brennräumen bewirkten Bewegungen der Kolben werden über Pleuel (nicht dargestellt) auf eine Kurbelwelle (nicht dargestellt) übertragen, die auf diese Weise rotierend angetrieben wird.

Für ein gesteuertes Einbringen von Frischgas oder von Kraftstoff-Frischgas-Gemisch in die Brennräume sowie für ein gesteuertes Ausbringen des durch die Verbrennungen erzeugten Abgases sind in den Zylinderkopf des Verbrennungsmotors Gaswechselventile (nicht sichtbar) integriert, die durch einen Ventiltrieb betätigt werden. Bei dem in den Zeichnungen dargestellten Ausführungsbeispiel eines erfindungsgemäßen Verbrennungsmotors umfasst dieser Ventiltrieb zwei Nockenwellen, von denen eine, nachfolgend auch als Einlassnockenwelle 14 bezeichnet, sämtliche Einlassventile und die anderen Nockenwelle, nachfolgend auch als Auslassnockenwelle 110 bezeichnet, sämtliche Auslassventile betätigt. Die Nockenwellen werden über einen Zahnriementrieb von der Kurbelwelle angetrieben. Dazu umfasst der Zahnriementrieb jeweils ein mit jeder der Nockenwellen sowie der Kurbelwelle drehfest verbundenes Zahnriemenrad 16, 18, Spann- und Führungsrollen (nicht sichtbar) sowie einen über die Zahnriemenräder 16, 18 und die Spann- und Führungsrollen geführten Zahnriemen 20.

In dem in den Zeichnungen dargestellten Ausführungsbeispiel eines erfindungsgemäßen Verbrennungsmotors ist ein Phasensteller 22 für die Einlassnockenwelle vorgesehen. Durch diesen wird ermöglicht, die Steuerzeiten für die Einlassventile zu verändern. Dies kann beispielsweise dazu dienen, den Verbrennungsmotor zeitweise in einem sogenannten Miller-Brennverfahren zu betreiben.

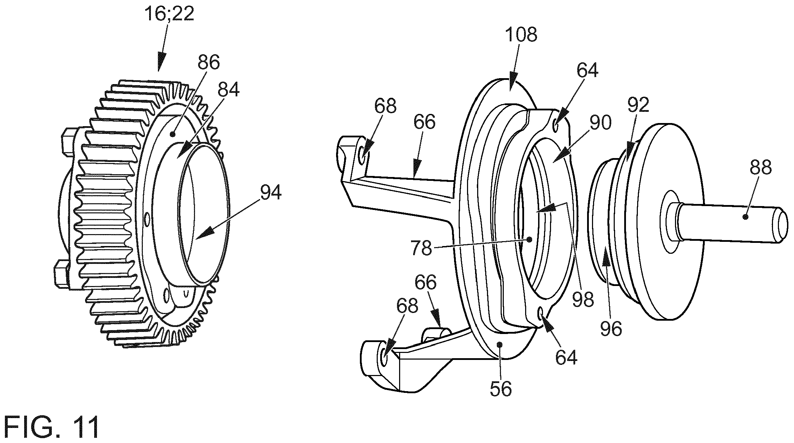

Der Phasensteller 22 ist in bekannter Weise (vgl. beispielsweise DE 10 2013 223 112 A1) in das Zahnriemenrad 16 der Einlassnockenwelle 14 integriert und umfasst einen drehfest mit der Einlassnockenwelle 14 verbundenen Flügelrotor 24, der in Grenzen drehbar innerhalb eines Stators 26 des Phasenstellers 22 angeordnet ist. Der Stator 26 bildet auf seiner im Wesentlichen zylindrischen Außenfläche eine Zahnkontur für den Eingriff mit den Zähnen des Zahnriemens 20 aus (vgl. Fig. 11). Zwischen dem Flügelrotor 24 und dem Stator 26 des Phasenstellers 22 sind mehrere Druckkammern (nicht sichtbar) ausgebildet, die, gesteuert durch ein Phasenstellerventil 28, gezielt mit einer Flüssigkeit, insbesondere einem Öl, befüllt werden können, um den Flügelrotor 24 innerhalb des Stators 26 definiert zu verdrehen, wodurch dem Ziel einer Veränderung der Steuerzeiten der Einlassventile entsprechend der Phasenwinkel zwischen der mit dem Flügelrotor 24 verbundenen Einlassnockenwelle 14 und dem über den Zahnriemen 20 mit der Kurbelwelle drehantriebsverbundenen Stator 26 verändert wird.

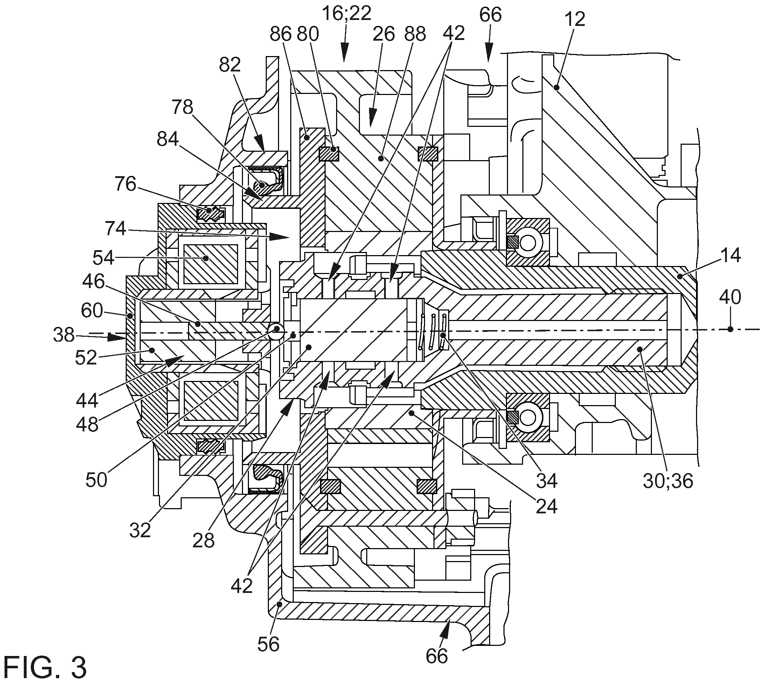

Das Phasenstellerventil 28 ist in eine Zentralschraube 30 integrierten, mittels der das den Phasensteller 22 integrierende Zahnriemenrad 16 mit der Einlassnockenwelle 14 verbunden ist. Das Phasenstellerventil 28 umfasst einen in der Fig. 3 vereinfacht dargestellten Ventilkörper 32, der mittels eines vorgespannten Federelements 34 in Richtung einer (der linken in der Fig. 3) Endstellung beaufschlagt ist und dessen Stellung innerhalb eines von der Zentralschraube 30 ausgebildeten Ventilgehäuses 36 mittels eines Aktuators 38 veränderbar ist. Der Ventilkörper 32 ist dabei entlang der Rotationsachse 40 der Einlassnockenwelle 14 verschiebbar. In Abhängigkeit von der Stellung des Ventilkörpers 32 gibt dieser Zu- und Abströmöffnungen 42, die in das Ventilgehäuse 36 integriert sind, frei oder verschließt diese, wodurch das Befüllen und Entleeren der Druckkammern des Phasenstellers 22 gesteuert werden kann.

Der Aktuator 38 umfasst ein Betätigungselement 44 mit einem Betätigungsstift 46, in dessen freies Ende eine Kugel 48 integriert ist, die stirnseitig ein Ende eines Achselements 50 des Ventilkörpers 32 kontaktiert. Das andere Ende des Betätigungsstifts 46 ist mit einem Anker 52 fest verbunden, der entlang der Rotationsachse 40 der Einlassnockenwelle 14 innerhalb des Aktuators 38 verschiebbar gelagert ist. Eine Verschiebung des Ankers 52, damit des gesamten Betätigungselements 44 und folglich auch des Ventilkörpers 32 in der zu einer zunehmenden Vorspannung des Federelements 34 führenden Richtung (nach rechts in der Fig. 3) wird elektromagnetisch bewegt. Hierzu umfasst der Aktuator 38 eine die Führung für den Anker 52 umgebende Spule 54, die von einer Steuerungsvorrichtung (nicht dargestellt), beispielsweise der Motorsteuerung, des Verbrennungsmotors entsprechend mit elektrischer Spannung beaufschlagt werden kann.

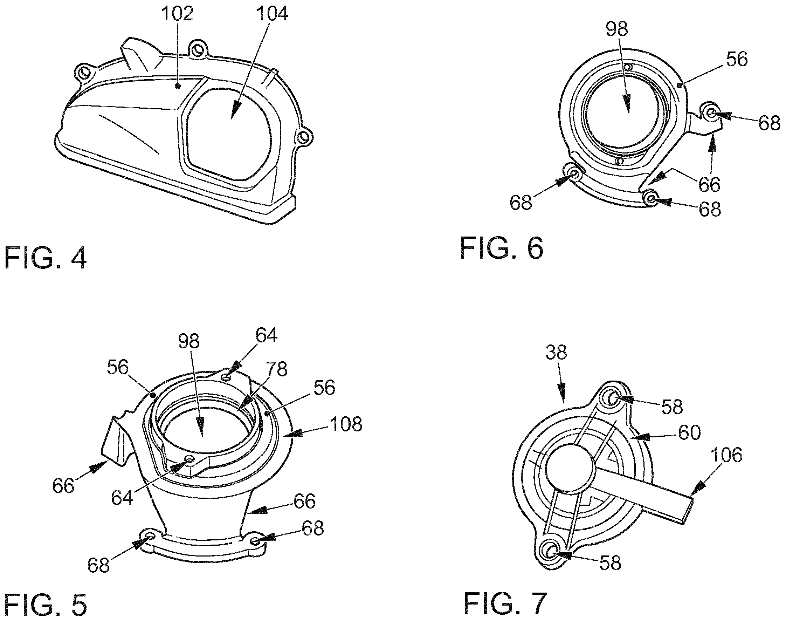

Der Aktuator 38 ist mittels Schraubverbindungen mit einem beispielsweise als Aluminium-Gussbauteil ausgebildeten Aktuatorhalter 56 verbunden. Dazu weist ein Gehäuse 60 des Aktuators 38 Durchgangsöffnungen 58 (vgl. Fig. 7) auf, durch die sich Gewindebolzen von dazugehörigen Schrauben 62 erstrecken können, die in dazugehörige Gewindeöffnungen 64 des Aktuatorhalters 56 (vgl. Fig. 5) einschraubbar sind.

Der Aktuatorhalter 56 selbst ist ebenfalls über Schraubverbindungen mit sowohl dem Zylinderkopfgehäuse 12 als auch mit dem Zylindergehäuse 10 des Verbrennungsmotors verbunden. Dazu weisen zwei Befestigungsabschnitte 66 des Aktuatorhalters 56 insgesamt drei Durchgangsöffnungen 68 auf (vgl. Fig. 6), durch die sich Gewindebolzen von dazugehörigen Schrauben 70 erstrecken können, die in dazugehörige Gewindeöffnungen 72 des Zylinderkopfgehäuses 12 und des Zylindergehäuses 10 einschraubbar sind.

Die Befestigungsabschnitte 66 werden innerhalb eines von dem Zahnriemen 20 umschlossenen Raums von dem Aktuatorhalter 56 zu dem Zylinderkopfgehäuse 12 und dem Zylindergehäuse 10 geführt. Dies ermöglicht es, sogar ohne eine Demontage des Aktuatorhalters 56, den Zahnriemen 20 zu demontieren bzw. einen neuen Zahnriemen 20 zu montieren.

Ein von dem Phasensteller 22, der Zentralschraube 30, dem Phasenstellerventil 28, dem Aktuator 38 und dem Aktuatorhalter 56 begrenzter Innenraum 74 ist teilweise mit der zur Verstellung des Phasenstellers 22 genutzten Flüssigkeit gefüllt. Um diesen Innenraum 74 gegen einen Flüssigkeitsaustritt abzudichten, sind mehrere Dichtelemente 76, 78, 80 vorgesehen. Diese Abdichtung ist bei dem dargestellten Verbrennungsmotor von besonderer Bedeutung, weil der Zahnriementrieb trocken laufend ausgebildet ist und folglich ein Übertritt von Flüssigkeit aus dem Innenraum 74 in den Bereich des Zahnriementriebs möglichst vermieden werden sollte.

Ein erstes Dichtelement 74 ist zwischen dem Gehäuse 60 des Aktuators 38 und dem Aktuatorhalter 56 angeordnet. Da diese Komponenten im Betrieb des Verbrennungsmotors nicht relativ zueinander bewegt werden, kann dieses erste Dichtelement 76 als einfaches statisches Dichtelement, beispielsweise als O-Ring, ausgebildet sein. Ein zweites Dichtelement 78 ist zwischen einem um die Rotationsachse 40 der Einlassnockenwelle 14 umlaufenden Ringabschnitt 82 des Aktuatorhalters 56 und einem ebenfalls um die Rotationsachse 40 der Einlassnockenwelle 14 umlaufenden Ringabschnitt 84 eines beispielsweise aus Stahl ausgebildeten Deckelteils 86 des Stators 26 des Phasenstellers 22 angeordnet. Da der Stator 26 des Phasenstellers 22 im Betrieb des Verbrennungsmotors von der Kurbelwelle rotierend angetrieben wird, während dies für den Aktuatorhalter 56 nicht gilt, ist das zweite Dichtelement 78 als dynamisches Dichtelement, im konkreten Ausführungsbeispiel als Radialwellendichtring ausgebildet. Weiterhin ist der Innenraum 74 mittels eines dritten, statischen und insbesondere als O-Ring ausgebildeten Dichtelement 80 abgedichtet, das zwischen dem Deckelteil 86 und einem Grundkörper 88 des Stators 26 des Phasenstellers 22 angeordnet ist.

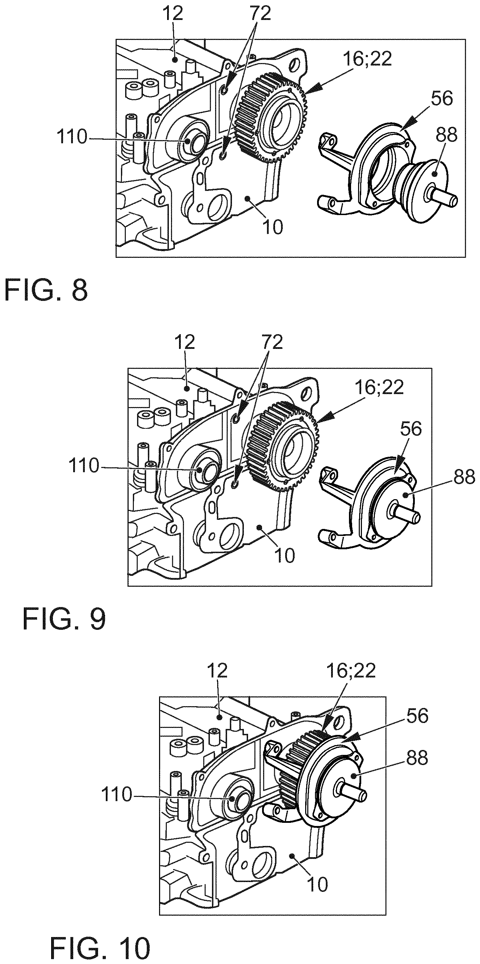

Für eine dauerhaft gute Dichtwirkung des mit seiner statischen Außenseite in den Aktuatorhalter 56 eingepressten Radialwellendichtrings 78 ist eine möglichst koaxiale Ausrichtung der für einen Kontakt mit dem Radialwellendichtring 78 vorgesehenen Innenfläche des Ringabschnitts 82 des Aktuatorhalters 56 zu der für einen Kontakt mit einer Lauffläche des Radialwellendichtrings 78 vorgesehenen Außenfläche des Ringabschnitts 84 des Deckelteils 86 notwendig. Dies wird durch die Verwendung eines passenden Montagewerkzeugs 88 im Rahmen der Montage des Verbrennungsmotors, konkret im Rahmen der Befestigung des Aktuatorhalters 56 an dem Motorgehäuse, sichergestellt. Dazu wird gemäß den Fig. 8 bis 11 zunächst der Aktuatorhalter 56 auf das Montagewerkzeug 88 aufgesteckt, wobei eine (Innen-)Passungsfläche 90 des Aktuatorhalters 56 (mit einem Durchmesser von beispielsweise 65 mm) eine erste (Außen-)Gegenpassungsfläche 92 des Montagewerkzeugs 88 kontaktiert. Die Einheit aus Montagewerkzeug 88 und Aktuatorhalter 56 wird anschließend auf den Phasensteller 22 aufgesteckt, wobei eine (Innen-)Passungsfläche 94 des Phasenstellers 22 (mit einem Durchmesser von beispielsweise 50 mm), die innenseitig des Ringabschnitts 84 des Deckelteils 86 angeordnet ist, eine zweite (Außen-)Gegenpassungsfläche 96 des Montagewerkzeugs 88 kontaktiert. Anschließend kann der Aktuatorhalter 56 in der ausgerichteten Position mit dem Motorgehäuse verschraubt werden. Die mit Übermaß bezüglich der Außendurchmesser der Gewindebolzen der Schrauben 70 ausgebildeten Durchgangsöffnungen 68 des Aktuatorhalters 56 gewährleisten dabei eine Ausrichtung des Aktuatorhalters 56 innerhalb eines Toleranzausgleichsbereichs.

Da alle (Gegen-)Passungsflächen unter vorgegebenen, relativ engen Toleranzen gefertigt wurden, kann auf diese Weise nicht nur die für einen Kontakt mit dem Radialwellendichtring 78 vorgesehene Innenfläche des Ringabschnitts 82 des Aktuatorhalters 56 ausreichend exakt koaxial zu der ebenfalls für einen Kontakt mit dem Radialwellendichtring 78 vorgesehenen Außenfläche des Ringabschnitt 84 des Deckelteils 86 erreicht werden, sondern auch eine exakte koaxiale Ausrichtung der (Innen-)Passungsfläche 90 des Aktuatorhalters 56 zu der Rotationsachse 40 der Einlassnockenwelle 14 und damit auch zu der Bewegungsachse des Ventilkörpers 32 des Phasenstellerventils 28. Da diese (Innen-)Passungsfläche 90 des Aktuatorhalters 56 eine Durchgangsöffnung 98 des Aktuatorhalters 56 begrenzt, die der Aufnahme des Aktuators 38 dient, kann dadurch auch eine relativ exakte koaxiale Ausrichtung des Betätigungsstifts 46 des Aktuators 38 relativ zu dem im Betrieb des Verbrennungsmotors drehend angetriebenen Achselement 50 des Ventilkörpers 32 erreicht werden, was Vorteile hinsichtlich des Verschleißes bringen kann.

Der Zahnriementrieb des Verbrennungsmotors läuft zum Schutz vor Verschmutzung und zudem aus Sicherheitsgründen in einem im Wesentlichen vollständig abgeschlossenen Aufnahmeraum. Ein Abdecken des Zahnriementriebs erfolgt dazu zum einen mittels einer Motorkonsole 100, die auch der Befestigung des Verbrennungsmotors in einem Motorraum eines Kraftfahrzeugs dient, vorgesehen ist. Die Motorkonsole 100 endet in etwa auf Höhe der Trennebene zwischen dem Zylindergehäuse 10 und dem Zylinderkopfgehäuse12. Der nicht von der Motorkonsole 100 abgedeckte Abschnitt des Zahnriementriebs kann mittels einer separaten Abdeckung 102, die beispielsweise aus Kunststoff und insbesondere als Spritzgießbauteil ausgebildet sein kann, abgedeckt werden, die über Schraubverbindungen mit dem Zylinderkopfgehäuse 12 verbindbar ist. Diese Abdeckung 102 kann für Wartungszwecke schnell und auf einfache Weise abgenommen werden. Dabei muss, anders als im Stand der Technik, nicht auch der Aktuator 38 abgenommen werden, da dieser unabhängig von der Abdeckung 102 mittels des Aktuatorhalters 56 an dem Motorgehäuse befestigt ist. Dies ist vorteilhaft, weil ein Abnehmen des Aktuators 38 zu einem Öffnen des auch von diesem begrenzten, teilweise mit Flüssigkeit gefüllten Innenraums 74 führen würde. Ein Entleeren und anschließendes Wiederbefüllen des diesen Innenraum 74 integrierenden Flüssigkeitssystems kann somit bei dem Entfernen der Abdeckung 102 unterbleiben.

Die Abdeckung 102 umfasst eine Durchgangsöffnung 104, innerhalb der im montierten Zustand der Abdeckung 102 ein Abschnitt des Aktuators 38 und des Aktuatorhalters 56 angeordnet sind. Dies weist den Vorteil auf, dass der Aktuator 38 auch dann zugänglich ist, wenn die Abdeckung 102 montiert ist. Insbesondere ist dadurch auch ein Steckverbinder 106 des Aktuators 38 frei zugänglich, mittels dessen der Aktuator 38 zur Energieversorgung und zur Ansteuerung mit der Steuerungsvorrichtung verbindbar ist. Die Durchgangsöffnung 104 ist so groß dimensioniert, dass die Abdeckung 102 abnehmbar ist, ohne den Aktuator 38 demontieren zu müssen. Dabei ist der Außenumfang des Aktuators 38 (mit Ausnahme eines Abschnitts des Steckverbinders 106) vollständig innerhalb des von der Durchgangsöffnung 104 der Abdeckung 102 begrenzten Freiraums angeordnet. Der Aktuatorhalter 56 weist dagegen in dem sich nicht durch die Durchgangsöffnung erstreckenden Abschnitt größere Außenabmessungen auf, was auch dazu dient eine ausreichende Dichtungswirkung für den zwischen der Abdeckung 102 und dem Aktuatorhalter 56 ausgebildeten Spalt zu realisieren. Dazu kontaktiert ein innenseitig der Abdeckung um die Durchgangsöffnung 104 umlaufender ringförmiger Flächenabschnitt der Abdeckung 102 möglichst vollflächig einen in einer Ebene liegenden, entsprechend ringförmig ausgebildeten Kontaktabschnitt 108 des Aktuatorhalters 56.

### Bezugszeichenliste

- 10: Zylindergehäuse
- 12: Zylinderkopfgehäuse
- 14: Einlassnockenwelle
- 16: Zahnriemenrad der Einlassnockenwelle
- 18: Zahnriemenrad der Auslassnockenwelle
- 20: Zahnriemen
- 22: Phasensteller
- 24: Flügelrotor
- 26: Stator
- 28: Phasenstellerventil
- 30: Zentralschraube
- 32: Ventilkörper
- 34: Federelement
- 36: Ventilgehäuse
- 38: Aktuator
- 40: Rotationsachse der Einlassnockenwelle
- 42: Zu- oder Abströmöffnung
- 44: Betätigungselement
- 46: Betätigungsstift
- 48: Kugel
- 50: Achselement
- 52: Anker
- 54: Spule
- 56: Aktuatorhalter
- 58: Durchgangsöffnung des Aktuators
- 60: Gehäuse des Aktuators
- 62: Schraube
- 64: Gewindeöffnung des Aktuatorhalters
- 66: Befestigungsabschnitt des Aktuatorhalters
- 68: Durchgangsöffnung des Aktuatorhalters
- 70: Schraube
- 72: Gewindeöffnung des Zylinderkopfgehäuses oder des Zylindergehäuses
- 74: Innenraum
- 76: erstes Dichtelement
- 78: zweites Dichtelement/Radialwellendichtring
- 80: drittes Dichtelement
- 82: Ringabschnitt des Aktuatorhalters
- 84: Ringabschnitt des Phasenstellers
- 86: Deckelteil
- 88: Montagewerkzeug
- 90: Passungsfläche des Aktuatorhalters
- 92: erste Gegenpassungsfläche des Montagewerkzeugs
- 94: Passungsfläche des Phasenstellers
- 96: zweite Gegenpassungsfläche des Montagewerkzeugs
- 98: Durchgangsöffnung des Aktuatorhalters
- 100: Motorkonsole
- 102: Abdeckung
- 104: Durchgangsöffnung der Abdeckung
- 106: Steckverbinder des Aktuators
- 108: Kontaktabschnitt des Aktuatorhalters
- 110: Auslassnockenwelle

## Patentansprüche

1. Verbrennungsmotor mit einem Motorgehäuse, einem Ventiltrieb, der eine Nockenwelle, einen mit der Nockenwelle wirkverbundenen Phasensteller (22) und einen Aktuator (38) zur Betätigung des Phasenstellers (22) umfasst, wobei der Phasensteller (22) und der Aktuator einen Innenraum (74) begrenzen, und mit einer den Phasensteller (22) umgebenden Abdeckung (102), **gekennzeichnet durch** einen von der Abdeckung (102) umgebenen Aktuatorhalter (56) zur Befestigung des Aktuators (22) an dem Motorgehäuse, wobei der Innenraum (74) mittels eines zwischen dem Phasensteller (22) und dem Aktuatorhalter (56) angeordneten Dichtelements (78) gegen einen Flüssigkeitsaustritt abgedichtet ist.

2. Verbrennungsmotor gemäß Anspruch 1, **dadurch gekennzeichnet, dass** die Abdeckung (102) eine Durchgangsöffnung (104) aufweist, durch die sich der Aktuator (38) und/oder der Aktuatorhalter (56) erstreckt.

3. Verbrennungsmotor gemäß Anspruch 2, **dadurch gekennzeichnet, dass** die Durchgangsöffnung (104) derart dimensioniert ist, dass die Abdeckung (102) ohne Demontage des Aktuators (38) und/oder des Aktuatorhalters (56) demontierbar ist.

4. Verbrennungsmotor gemäß einem der vorhergehenden Ansprüche, **dadurch gekennzeichnet, dass** ein Phasenstellerventil (28) einen koaxial oder parallel einer Rotationsachse (40) der Nockenwelle verschiebbaren Ventilkörper (32) umfasst.

5. Verbrennungsmotor gemäß einem der vorhergehenden Ansprüche, **dadurch gekennzeichnet, dass** der Aktuator (38) ein koaxial oder parallel zu einer Rotationsachse (40) der Nockenwelle verschiebbares Betätigungselement (44) umfasst.

6. Verbrennungsmotor gemäß einem der vorhergehenden Ansprüche, **dadurch gekennzeichnet, dass** der Phasensteller (22) und/oder der Aktuatorhalter (56) eine um eine Rotationsachse (44) der Nockenwelle umlaufende Passungsfläche (90; 94) aufweist.

7. Verbrennungsmotor gemäß einem der vorhergehenden Ansprüche, **dadurch gekennzeichnet, dass** Befestigungsmittel zur Befestigung des Aktuatorhalters (56) an einem Befestigungsabschnitt des Motorgehäuses vorgesehen sind, die eine befestigte Positionierung des Aktuatorhalters (56) relativ zu dem Befestigungsabschnitt des Motorgehäuses innerhalb eines definierten Toleranzausgleichsbereich bezüglich der Ausrichtung radial zu einer Rotationachse (40) der Nockenwelle ermöglichen.

8. Verbrennungsmotor gemäß Anspruch 7, **dadurch gekennzeichnet, dass** eine oder mehrere Durchgangsöffnungen (68) des Aktuatorhalter (56) und eine oder mehrere sich durch die Durchgangsöffnungen (68) des Aktuatorhalters (56) und in Aufnahmeöffnungen des Motorgehäuses erstreckende Befestigungselemente vorgesehen sind, wobei die Durchgangsöffnungen (68) des Aktuatorhalters (56) und/oder die Aufnahmeöffnungen bezüglich der sich durch oder in diese erstreckenden Abschnitte der Befestigungselemente ein Übermaß aufweisen.

9. Verbrennungsmotor gemäß einem der vorhergehenden Ansprüche, **gekennzeichnet durch** einen trocken laufenden Riementrieb zwischen einem Riemenrad (16) der Nockenwelle und einem Riemenrad einer Kurbelwelle.

10. Verfahren zur Montage eines Verbrennungsmotors gemäß Anspruch 6 oder gemäß einem der von Anspruch 6 abhängigen Ansprüche, **dadurch gekennzeichnet, dass** der Aktuatorhalter (56) mit seiner Passungsfläche (90) auf eine erste umlaufende Gegenpassungsfläche (92) eines Montagewerkzeugs (88) aufgesteckt und anschließend das den Aktuatorhalter (56) tragende Montagewerkzeug (88) mit einer zweiten umlaufenden Gegenpassungsfläche (96) auf die Passungsfläche (94) des Phasenstellers (22) aufgesteckt wird.

## Claims

1. Internal combustion engine having an engine housing, a valve train that comprises a camshaft, a phase shifter (22) that is operatively connected to the camshaft, and an actuator (38) for actuating the phase shifter (22), wherein the phase shifter (22) and the actuator delimit an interior space (74), and having a cover (102) that surrounds the phase shifter (22), **characterized by** an actuator holder (56) surrounded by the cover (102) for fastening the actuator (22) to the engine housing, wherein the interior space (74) is sealed against leakage of liquids by means of a sealing element (78) arranged between the phase shifter (22) and the actuator holder (56).

2. Internal combustion engine according to claim 1, **characterized in that** the cover (102) has a through opening (104) through which the actuator (38) and/or the actuator holder (56) extends.

3. Internal combustion engine according to claim 2, **characterized in that** the through opening (104) is dimensioned such that the cover (102) can be removed without removing the actuator (38) and/or the actuator holder (56).

4. Internal combustion engine according to one of the preceding claims, **characterized in that** a phase shifter valve (28) comprises a valve body (32) that can be displaced coaxially or parallel to an axis of rotation (40) of the camshaft.

5. Internal combustion engine according to one of the preceding claims, **characterized in that** the actuator (38) comprises an actuating element (44) that can be displaced coaxially or parallel to an axis of rotation (40) of the camshaft.

6. Internal combustion engine according to one of the preceding claims, **characterized in that** the phase shifter (22) and/or the actuator holder (56) has a fit surface (90; 94) rotating around an axis of rotation (44) of the camshaft.

7. Internal combustion engine according to one of the preceding claims, **characterized in that** fastening means are provided for fastening the actuator holder (56) to a fastening section of the engine housing, which fastening means enable a fixed positioning of the actuator holder (56) relative to the fastening section of the engine housing within a defined tolerance compensation range with respect to the alignment radial to an axis of rotation (40) of the camshaft.

8. Internal combustion engine according to claim 7, **characterized in that** one or more through openings (68) of the actuator holder (56) and one or more fastening elements extending through the through openings (68) of the actuator holder (56) and into receiving openings of the engine housing are provided, wherein the through openings (68) of the actuator holder (56) and/or the receiving openings are oversized with respect to the segments of the fastening elements extending through or into them.

9. Internal combustion engine according to one of the preceding claims, **characterized by** a dry running belt drive between a belt wheel (16) of the camshaft and a belt wheel of a crankshaft.

10. Method for mounting an internal combustion engine according to claim 6 or according to one of the claims dependent on claim 6, **characterized in that** the actuator holder (56) is plugged with its fit surface (90) onto a first circumferential counter-fit surface (92) of a mounting tool (88), and then the mounting tool (88) carrying the actuator holder (56) is plugged with a second circumferential counter-fit surface (96) onto the fit surface (94) of the phase shifter (22).

## Revendications

1. Moteur à combustion interne muni d'un carter de moteur, d'un mécanisme de distribution qui comprend un arbre à cames, un déphaseur (22) coopérant avec l'arbre à cames et un actionneur (38) servant à actionner le déphaseur (22), le déphaseur (22) et l'actionneur délimitant un espace intérieur (74) et le moteur étant muni d'un capot (102) entourant le déphaseur (22), **caractérisé par** un support d'actionneur (56) entouré par le capot (102) et servant à fixer l'actionneur (22) sur le carter de moteur, l'espace intérieur (74) étant rendu étanche pour empêcher toute sortie de liquide au moyen d'un élément d'étanchéité (78) agencé entre le déphaseur (22) et le support d'actionneur (56).

2. Moteur à combustion interne selon la revendication 1, **caractérisé en ce que** le capot (102) présente une ouverture de passage (104), à travers laquelle s'étendent l'actionneur (38) et/ou le support d'actionneur (56).

3. Moteur à combustion interne selon la revendication 2, **caractérisé en ce que** l'ouverture de passage (104) est dimensionnée de sorte que le capot (102) puisse être démonté sans démonter l'actionneur (38) et/ou le support d'actionneur (56).

4. Moteur à combustion interne selon une des revendications précédentes, **caractérisé en ce qu'**une soupape de déphaseur (28) comprend un corps de soupape (32) mobile de manière coaxiale ou parallèle à un axe de rotation (40) de l'arbre à cames.

5. Moteur à combustion interne selon une des revendications précédentes, **caractérisé en ce que** l'actionneur (38) comprend un élément d'actionnement (44) qui est mobile de manière coaxiale ou parallèle par rapport à un axe de rotation (40) de l'arbre à cames.

6. Moteur à combustion interne selon une des revendications précédentes, **caractérisé en ce que** le déphaseur (22) et/ou le support d'actionneur (56) présente(nt) une surface d'adaptation (90 ; 94) tournant autour d'un axe de rotation (44) de l'arbre à cames.

7. Moteur à combustion interne selon une des revendications précédentes, **caractérisé en ce que** des moyens de fixation servent à la fixation du support d'actionneur (56) au niveau d'une section de fixation du carter de moteur, les moyens permettant un positionnement fixe du support d'actionneur (56) par rapport à la section de fixation du carter de moteur à l'intérieur d'une zone de compensation de tolérances définie par rapport à une orientation radiale par rapport à un axe de rotation (40) de l'arbre à cames.

8. Moteur à combustion interne selon la revendication 7, **caractérisé en ce qu'**une ou plusieurs ouvertures de passage (68) du support d'actionneur (56) et un ou plusieurs éléments de fixation s'étendant à travers les ouvertures de passage (68) du support d'actionneur (56) et dans des ouvertures de réception du carter de moteur sont prévus, les ouvertures de passage (68) du support d'actionneur (56) et/ou les ouvertures de réception présentant un surdimensionnement par rapport aux sections des éléments de fixation s'étendant à travers ou dans celles-ci.

9. Moteur à combustion interne selon une des revendications précédentes, **caractérisé par** une courroie de distribution fonctionnant à sec entre une poulie (16) de l'arbre à cames et une poulie d'un vilebrequin.

10. Procédé de montage d'un moteur à combustion interne selon la revendication 6 ou selon une des revendications dépendant de la revendication 6, **caractérisé en ce que** le support d'actionneur (56) avec sa surface d'adaptation (90) est placé sur une première contre-surface d'adaptation périphérique (92) d'un outil de montage (88) et ensuite, l'outil de montage (88) portant le support d'actionneur (56) est placé avec une seconde contre-surface d'adaptation périphérique (96) sur la surface d'adaptation (94) du déphaseur (22).
